# EUROPEAN PATENT SPECIFICATION

(11) **EP 3 155 683 B1**
(45) Date of publication and mention of the grant of the patent: **05.12.2018**
(21) Application number: 15722933.7
(22) Date of filing: 13.05.2015
(51) Int. Cl.: H01M 8/04119, H01M 8/0662

(54) **TREATMENT DEVICE FOR TREATING EXHAUST GAS OF A FUEL CELL STACK, FUEL CELL SYSTEM AND VEHICLE WITH A FUEL CELL SYSTEM**
BEHANDLUNGSVORRICHTUNG ZUR BEHANDLUNG VON ABGAS EINES BRENNSTOFFZELLENSTAPELS, BRENNSTOFFZELLENSYSTEM UND FAHRZEUG MIT EINEM BRENNSTOFFZELLENSYSTEM
DISPOSITIF DE TRAITEMENT DE GAZ D'ÉCHAPPEMENT D'UN EMPILEMENT DE PILES À COMBUSTIBLE, SYSTÈME DE PILES À COMBUSTIBLE ET VÉHICULE DOTÉ D'UN SYSTÈME DE PILES À COMBUSTIBLE

(30) Priority: 20.05.2014 DE 102014007677
(43) Date of publication of application: 19.04.2017
(73) Proprietor: Daimler AG, 70327 Stuttgart (DE)
(72) Inventor: BARTHEL, Leif-Patrik, 73079 Süßen (DE); HOLLNAICHER, Simon, 73095 Albershausen (DE); KOLBE, Alfred, 73110 Hattenhofen (DE)
(74) Representative: JENSEN & SON
(86) International application number: PCT/EP2015/000991
(87) International publication number: WO 2015/176806

(56) References cited:
- JP-A- 2008 121 910
- JP-A- 2008 133 989
- JP-A- 2011 085 309
- US-A1- 2001 010 871
- US-A1- 2006 147 774
- US-A1- 2008 237 902

## Description

The invention relates to a treatment device for treating exhaust gas of a fuel cell stack of a fuel cell system. The treatment device includes a humidifier, which is adapted to utilize the exhaust gas for humidifying a medium capable of being introduced into the fuel cell stack. Furthermore, a water separator is provided, which serves for reducing a content of liquid water in the exhaust gas. The humidifier and the water separator are integrated in a common constructional unit. Furthermore, the invention relates to a fuel cell system with such a treatment device and to a vehicle with a fuel cell system.

US 2008/0237902 A1 describes a humidifier with a central tube for off-gas. Through off-gas inlets the off-gas is introduced into a hollow tube membrane bundle at a rear end of the humidifier. The off-gas then flows in counter-current to the air which passes through the hollow tube membranes. Through off-gas outlets 11a provided in an outer case of the humidifier the off-gas leaves the humidifier at its front end Therefore, the off-gas flows through the hollow tube membrane bundle in an axial direction.

JP 2011 085309 A describes a humidifier, wherein hollow fiber membrane layers are surrounded by porous bodies having a mesh structure. Off-gas flows from inlet portions provided in an inner casing of the humidifier to outlets of an outer casing (70) Air flowing through the hollow fiber membranes takes up humidity from the off-gas flowing in counter-current to the air
DE 101 10 419 A1 describes a fuel cell system, in which a hollow fiber membrane humidifier is disposed upstream of a fuel cell. Exhaust gas of the fuel cell is supplied to the humidifier as a humidifying medium. The hollow fiber membrane humidifier and a steam/liquid separator downstream of the same can be integrated to decrease the pressure loss in the outlet pipe of the fuel cell.

US 2005/0045043 A1 describes a humidifier for a fuel cell system. Herein, a water separator is also disposed in a housing receiving tubes with a desiccant: A wet medium flows through interstices between the tubes containing the desiccant, which thus absorb humidity. The stored humidity is then absorbed by another medium, which also flows through the humidifier. The medium serving for humidifying is set in a rotational movement by means of a turbulator after flowing through the interstices between the tubes such that liquid water droplets are separated from it. The collected liquid water is drained from the housing of the humidifier via an outlet.

Such treatment devices for treating exhaust gas require comparatively much space and a considerable number of components.

Therefore, it is the object of the present invention to provide a treatment device of the initially mentioned kind, a fuel cell system with such a treatment device as well as a vehicle with such a fuel cell system, which entail(s) a particularly low installation space requirement.

This object is solved by a treatment device having the features of claim 1, a fuel cell system having the features of claim 8 and by a vehicle having the features of claim 9. Advantageous configurations with convenient developments of the invention are specified in the dependent claims.

In the treatment device according to the invention, an outflow area of the humidifier has a cross-section capable of being passed by the exhaust gas, which is larger than a cross-section of an inflow area of the humidifier capable of being passed. Furthermore, at least one collection area for the liquid water separated upon exit from the outflow area is provided in the constructional unit. This is based on the realization that by enlarging the cross-section capable of being passed in the area of the humidifier serving for transferring humidity, a deceleration of the flow of the exhaust gas is achieved. This results in a reliable separation of the liquid water without a particularly high run length being required.

Thus, the circumstance is utilized that with a geometry of the humidifier, which is associated with an increasing cross-section capable of being passed, a decelerated flow is present in the humidifier. In the outflow area, the exhaust gas has the very low flow velocity associated therewith, and it exits on a comparatively large area in well distributed manner. By this deceleration of the flow velocity of the exhaust gas, a particularly efficient separation of liquid water can be achieved in the outflow area.

The low exit velocity of the exhaust gas in the outflow area is therefore utilized to perform the separation of liquid water at this place and directly following in the treatment device.

However, even within the distance from the inflow area to the outflow area and/or in the inflow area itself, efficient separation of liquid water with the aid of gravity and due to density differences is achievable. Namely, a separation of liquid water already occurs while the exhaust gas flows from the inflow area towards the outflow area of the humidifier.

Since the function of the water separator is thus integrated in the humidifier, the present installation space is particularly efficiently utilized and particularly much installation space can be saved compared to a consecutive arrangement of humidifier and water separator in a constructional unit. This is also associated with saving of components otherwise to be provided for water separation. Thus, the cost associated with these components can also be reduced.

The inflow area is formed as a channel, which is disposed in a bundle of hollow fiber membranes capable of being passed by the exhaust gas in radial direction. Herein, the outflow area is constituted by an outside of the bundle. Then, the exhaust gas flows from the channel towards the outside of the - preferably substantially round - bundle such that comparatively much liquid water can be separated already within the bundle. In addition, separation of liquid water already occurs in the channel itself and in particular in transition from the channel into the area of the hollow fiber membranes constituting the bundle.

A particularly uniform low flow velocity and a particularly good distribution of the exhaust gas exiting the bundle at the outside thereof is achievable if the channel is disposed centrally in the bundle. This too is conducive to the separation of liquid water.

It has proven further advantageous that a clearance communicating with the at least one collection area for the liquid water is provided between the outside of the bundle and a housing wall of the constructional unit. Via this clearance, the exhaust gas at least largely freed of liquid water can be particularly unimpeded discharged from the treatment device on the one hand. On the other hand, thus, the liquid water separated from the exhaust gas can arrive at the collection area for the liquid water in simple manner and reliable in terms of process. This improves the functionality of the treatment device. Furthermore, a separation of liquid water arises on the housing wall of the constructional unit bounding the clearance.

A plurality of webs is provided, which abut on the outside of the bundle on the one hand and on the housing wall on the other hand. Such webs support the bundle from the outside and thus ensure stabilization, in particular ensuring dimensional stability of the bundle. In addition, the size of the clearance can be well adjusted by the height of the webs.

In order to particularly well satisfy the above mentioned functions, it can in particular be provided that the webs are disposed in the clearance uniformly spaced from each other in circumferential direction of the bundle.

Further, it is conducive to the stability of the bundle if a supporting structure is provided, which supports the hollow fiber membranes of the bundle surrounding the channel. Thus, the function of the channel as the inflow area with a desired cross-section capable of being passed can also be simply and permanently ensured.

A particularly unimpeded transition of the exhaust gas from the channel into the bundle, in which the exhaust gas flows around the hollow fiber membranes on the outer circumferential side, is achievable if the supporting structure is formed in the manner of a coil spring.

Furthermore, it is advantageous if the bundle is substantially round formed, wherein at least a bottom-side part of a housing of the constructional unit has at least one corner area, by which the at least one collection area for the liquid water is constituted. The formation of the constructional unit in angular, in particular rectangular, manner at least in the lower part facilitates the manufacture thereof and its arrangement in the fuel cell system. In addition, the corner areas otherwise unused with a round bundle presently can be particularly well utilized, namely for collecting the liquid water. Thus, the liquid water does not impede the flow of the exhaust gas through the bundle of the hollow fiber membranes.

A particularly low pressure loss in the exhaust gas path is achievable if two bundles are disposed in a housing of the constructional unit. Namely, a shorter path then has to be traveled from the inflow area to the outflow area in a respective of the two bundles than in providing a single bundle with a number of hollow fiber membranes, which corresponds to that of both bundles.

In addition, in such a configuration of the treatment device, the at least one collection area for the liquid water can be formed in a recess of a bottom of the housing provided between the two bundles. Thus, the space between the two bundles can also be well utilized, namely for collecting the separated liquid water. This in particular applies if the - for example round - bundles are symmetrically disposed and/or if the recess is V-shaped formed.

With an accommodation of two bundles in the housing of the constructional unit, in a space between the two bundles and a ceiling area of the housing, at least one further collection area for the exhaust gas at least largely freed of liquid water can be provided. Thus, this upper clearance between the two preferably round bundles can be used as an outflow area for the dry exhaust gas.

Finally, it has proven advantageous if a retaining structure is provided, which keeps the two bundles spaced from each other. Namely, the space between the two bundles can thus be particularly well used for collecting the liquid water and for collecting the dry exhaust gas thus at least largely freed of liquid water.

Such a retaining structure can have at least one stiffening element encompassing the respective bundle at least in certain areas. This retaining structure then ensures stable retention of the bundles and dimensional stability thereof.

The fuel cell system according to the invention, which can in particular be employed in a vehicle, includes a treatment device according to the invention. Herein, the exhaust gas of a cathode of the fuel cell stack is preferably usable in the humidifier for humidifying an oxidant capable of being introduced into the cathode of the fuel cell stack. Furthermore, it is advantageous if the exhaust gas at least largely freed of liquid water is supplied to a turbine of an exhaust gas turbocharger of the fuel cell system via a line. In that dry exhaust gas is supplied to the turbine, it is not damaged, and in particular freezing of the turbine is effectively prevented.

Such a fuel cell system can include a plurality of further components usual in particular for fuel cell systems of vehicles, which presently do not have to be explained in detail.

The vehicle according to the invention includes a fuel cell system according to the invention.

The advantages and preferred embodiments described for the treatment device according to the invention also apply to the fuel cell system according to the invention and to the vehicle according to the invention.

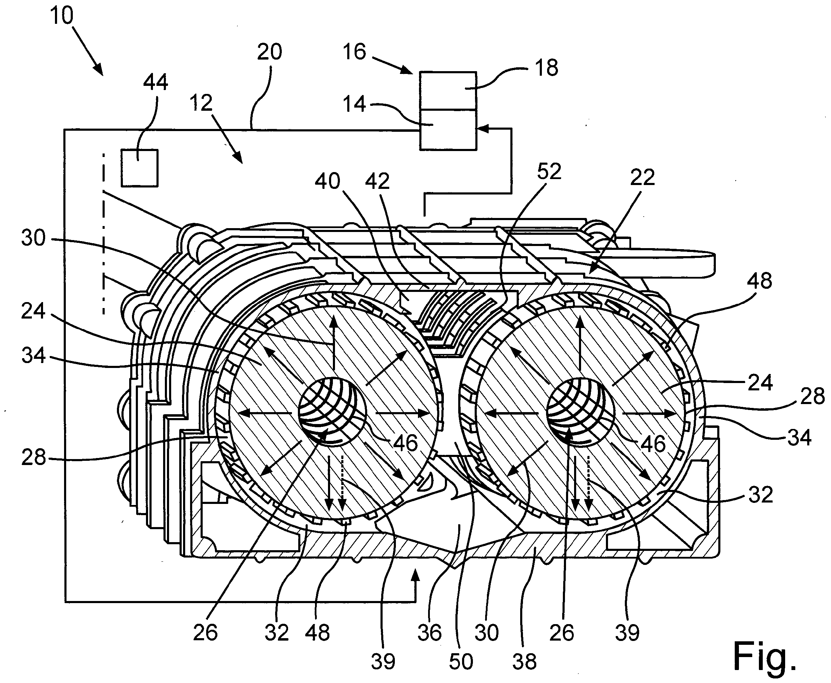

The features and feature combinations mentioned above in the description as well as the features and feature combinations mentioned below in the description of figures and/or shown in the figures alone are usable not only in the respectively specified combination, but also in other combinations or alone, without departing from the scope of the invention. Thus, implementations are also to be considered as encompassed and disclosed by the invention, which are not explicitly shown in the figure or explained, but arise from and can be generated by separated feature combinations from the explained implementations.

Further advantages, features and details of the invention are apparent from the claims, the following description of preferred embodiments as well as based on the drawing.

It shows a hollow fiber humidifier of a fuel cell system for a vehicle in a partially sectioned view, wherein the hollow fiber humidifier is formed as a water separator at the same time.

Of a fuel cell system 10 of a vehicle, a humidifier 12 is shown in the Fig., which serves for humidifying an oxidant to be provided for the fuel cell reaction. This oxidant can for instance be oxygen or air. The humidified air exits the humidifier 12 and is supplied to a cathode 14 of a fuel cell stack 16 of the fuel cell system 10. An anode 18 of the fuel cell stack 16 can be supplied with hydrogen as the fuel for the fuel cell reaction occurring in the fuel cell stack 16. Presently, the exhaust gas of the cathode 14 containing the product water formed in the fuel cell reaction is supplied to the humidifier 12 as a humectant. A corresponding exhaust gas line 20 is schematically shown in the Fig.

In the humidifier 12, separation of liquid water from the exhaust gas occurs at the same time. Thus, the humidifier 12 and a water separator are integrated in a common constructional unit in that both humidifying the supply air and removing liquid water from the exhaust gas occur within a common housing 22.

Presently, in the housing 22 of the humidifier 12, two fiber bundles 24 are disposed, which include a plurality of hollow fiber membranes. In the center of the respective fiber bundle 24, an inflow area in the form of a channel 26 is provided, via which the wet exhaust gas of the cathode 14 gets into the respective fiber bundle 24. The individual hollow fibers surrounding the respective channel 26 are oriented parallel to the respective channel 26. The supply air to be humidified flows through these hollow fibers, which is then passed on from the humidifier 12 to the cathode 14 of the fuel cell stack 16.

The exhaust gas of the cathode 14 flows in the humidifier 12 from the respective channel 26 in radial direction towards an outside 28 of the - presently round formed - respective fiber bundle 24. An outflow area is provided by this outside 28 of the respective fiber bundle 24, in which the exhaust gas has a decelerated flow velocity and exits the respective fiber bundle 24 well distributed on a large area.

The deceleration of the flow velocity of the exhaust gas is caused in that the cross-section available in the channel 26 capable of being passed, which corresponds to the lateral surface of the respective channel 26, is less than the cross-section available in the area of the outside 28 capable of being passed. This increase of the cross-section capable of being passed on the path from the channel 26 to the outside 28 results in reduction of the flow velocity.

Due to the deceleration of the flow velocity, liquid water is separated on the outside 28 of the respective fiber bundle 24. The low exit velocity from the respective fiber bundle 24 is therefore used to directly subsequently perform the separation of liquid water.

The direction of the exhaust gas flowing in radial direction from the inflow area constituted by the channel 26 towards the outside 28 is illustrated by arrows 30 in the Fig. On the path from the channel 26 towards the outside 28, the wet exhaust gas flows around the membranes of the hollow fibers, through which the supply air to be humidified flows. Herein, the humidification of the supply air occurs. In addition, water is also separated in flowing through the way from the channel 26 towards the outside 28.

In the channel 26 formed in the manner of a pipe extending longitudinally through the fiber bundle 24 too, separation of liquid water already occurs. A preferred direction, in which the separated liquid water moves due to the gravitation and due to a density difference related to gaseous components of the exhaust gas, is illustrated by a further arrow 39 in the respective fiber bundle 24 in the Fig.

The radial exit of the exhaust gas from the channel 26 is effected in that the hollow fiber membranes of the respective fiber bundle 24 can be passed by the supply air to be humidified in the axial direction of the channel 26, however, in comparison, the respective channel 26 is closed on the end side. At the axial end of the channel 26, namely, the individual hollow fiber membranes of the respective fiber bundle 24 are passed through an end plate closing the channel 26, which is preferably formed by a casting compound.

The liquid water separated on the outside 28 of the respective fiber bundle 24 gets from a clearance 32 formed between a housing wall 34 of the housing 22 and the outside 28 of the respective fiber bundle 24 to a collection area 36 for liquid water. Presently, the collection area 36 is formed as a V-shaped recess in a bottom 38 of the housing 22. This groove-shaped recess is located centrally between the two fiber bundles 24 symmetrically disposed in the housing 22. The liquid water can be drained from the collection area 36 via an outlet (presently not shown).

Presently, the housing 22 is adapted to the contour of the round fiber bundles 24 disposed next to each other in an upper area, however, a bottom-side partial area of the housing 22 is formed cuboid-shaped. However, presently, the otherwise unused corner areas arising in accommodation of one or two round fiber bundles 24 in the housing 22 with the cuboid-shaped partial area can be used for collecting the separated liquid water.

A space 40 in the housing 22 too, which is bounded by upper partial areas of the fiber bundles 24 and a ceiling area 42 of the housing 22, is presently used, namely for discharging the dry exhaust gas, thus the exhaust gas, from which the liquid water was at least largely separated. From the upper collection area provided by this space 40, the dry exhaust gas then flows towards a turbine 44 of an exhaust gas turbocharger, the compressor wheel of which compresses the supply air supplied to the humidifier 12 in a manner presently not shown in more detail.

In each fiber bundle 24, preferably, a supporting structure is provided, which ensures that the respective channel 26 has a good dimensional stability. This supporting structure can be formed as a coil spring 46. Presently, the coil spring 46 abuts on the hollow fiber membranes, which immediately surround the channel 26.

Presently, webs 48 extending in the axial direction of the respective channel 26 ensure keeping the clearance 32 free and thus the good capability of being passed thereof for the dry exhaust gas, which are disposed on the outside 28 of the respective fiber bundle 24.

Furthermore, between the two fiber bundles 24, a retaining structure 50 is provided, which keeps the two fiber bundles 24 spaced from each other. This retaining structure 50 additionally has ribs 52, which encompass the respective fiber bundle 24 in circumferential direction at least to a certain extent and thus serve for stiffening the respective fiber bundle 24. Presently, the ribs 52 are uniformly spaced from each other in the axial direction of the respective channel 26. In corresponding manner, the webs 48 are disposed on the outside 28 of the respective fiber bundle 24 uniformly spaced from each other in circumferential direction.

In alternative embodiments, a single fiber bundle 24 can be disposed in a housing, the corner areas of which can be used for collecting separated liquid water and for discharging the dry exhaust gas.

In addition, with a hollow fiber humidifier formed in the manner of the humidifier 12 shown in the Fig. with integrated water separator, the fuel to be supplied to the fuel cell stack 16 can also be humidified.

### List of reference characters

- 10: Fuel cell system
- 12: Humdifier
- 14: Cathode
- 16: Fuel cell stack
- 18: Anode
- 20: Exhaust gas line
- 22: Housing
- 24: Fiber bundle
- 26: Channel
- 28: Outside
- 30: Arrow
- 32: Clearance
- 34: Housing wall
- 36: Collection area
- 39: Arrow
- 38: Bottom
- 40: Space
- 42: Ceiling area
- 44: Turbine
- 46: Coil spring
- 48: Web
- 50: Retaining structure
- 52: Rib

## Claims

1. Treatment device for treating exhaust gas of a fuel cell stack (16) of a fuel cell system (10), including a humidifier (12), in which the exhaust gas is usable for humidifying a medium capable of being introduced into the fuel cell stack (16), and including a water separator for reducing a content of liquid water in the exhaust gas, wherein the humidifier (12) and the water separator are integrated in a common constructional unit,
wherein an outflow area (28) of the humidifier (12) has a cross-section capable of being passed, which is larger than a cross-section of an inflow area (26) of the humidifier (12) capable of being passed, wherein at least one collection area (36) for the liquid water separated upon exiting the outflow area (28) is provided in the constructional unit,
**characterized in that**
the inflow area (26) is formed as a channel, which is disposed in a bundle (24) of hollow fiber membranes, wherein the bundle (24) is capable of being passed by the exhaust gas in radial direction, wherein the outflow area (28) is constituted by an outside of the bundle (24), wherein between the outside of the bundle (24) and a housing wall (34) of the constructional unit a clearance (32) communicating with the at least one collection area (36) for the liquid water is provided and the treatment device comprises a plurality of webs (48) which abut on the outside of the bundle (24) on the one hand and on the housing wall (34) on the other hand.

2. Treatment device according to claim 1,
**characterized in that**
the channel is disposed in a substantially round bundle (24) of the hollow fiber membranes, in particular centrally.

3. Treatment device according to claim 1 or 2,
**characterized in that**
the webs (48) are uniformly spaced from each other in circumferential direction of the bundle (24) and/or the treatment device comprises a supporting structure in particular formed as a coil spring (46) for the hollow fiber membranes of the bundle (24) surrounding the channel.

4. Treatment device according to any one of claims 1 to 3,
**characterized in that**
the bundle (24) is formed substantially round, wherein at least a bottom-side part of a housing (22) of the constructional unit has at least one corner area, by which the at least one collection area (36) for the liquid water is constituted.

5. Treatment device according to any one of claims 1 to 4,
**characterized in that**
two in particular symmetrically disposed bundles (24) are disposed in a housing (22) of the constructional unit, wherein the at least one collection area (36) for the liquid water is formed in an in particular V-shaped recess of a bottom (38) of the housing (22) provided between the two bundles (24).

6. Treatment device according to claim 5,
**characterized in that**
at least one further collection area for the exhaust gas at least largely freed of liquid water is provided in a space (40) between the two bundles (24) and a ceiling area (42) of the housing (22).

7. Treatment device according to claim 5 or 6,
**characterized by**
a retaining structure (50), which keeps the two bundles (24) spaced from each other and has at least one stiffening element (52) encompassing the respective bundle (24) at least in certain areas.

8. Fuel cell system, in particular for a vehicle, including a treatment device according to any one of claims 1 to 7, wherein the exhaust gas of a cathode (14) of the fuel cell stack (16) is usable in the humidifier (12) for humidifying an oxidant capable of being introduced into the cathode (14) of the fuel cell stack (16), and the exhaust gas at least largely freed of liquid water can be supplied to a turbine (44) of an exhaust gas turbocharger of the fuel cell system (10).

9. Vehicle with a fuel cell system (10) according to claim 8.

## Patentansprüche

1. Behandlungsvorrichtung zur Behandlung von Abgas eines Brennstoffzellenstapels (16) eines Brennstoffzellensystems (10), umfassend einen Befeuchter (12), in dem das Abgas zur Befeuchtung eines in den Brennstoffzellenstapel (16) einführbaren Mediums verwendet werden kann, sowie einen Wasserabscheider zur Verringerung eines Gehalts an flüssigem Wasser im Abgas, wobei der Befeuchter (12) und der Wasserabscheider in einer gemeinsamen Baueinheit integriert sind,
wobei ein Abflussbereich (28) des Befeuchters (12) einen Durchgangsquerschnitt hat, der größer als der Durchgangsquerschnitt eines Zuflussbereichs (26) des Befeuchters (12), wobei in der Baueinheit mindestens ein Sammelbereich (36) für das abgeschiedene flüssige Wasser nach dessen Austritt aus dem Abflussbereich (28) vorgesehen ist,
**dadurch gekennzeichnet, dass**
der Zuflussbereich (26) als ein Kanal ausgebildet ist, der in einem Bündel (24) von Hohlfasermembranen angeordnet ist, wobei das Abgas in radialer Richtung am Bündel (24) vorbei strömen kann, wobei der Abflussbereich (28) von einer Außenseite des Bündels (24) gebildet ist, wobei zwischen der Außenseite des Bündels (24) und einer Gehäusewand (34) der Baueinheit ein mit dem mindestens einem Sammelbereich (36) für das abgeschiedene flüssige Wasser kommunizierender Freiraum (32) vorgesehen ist und wobei die Behandlungsvorrichtung eine Vielzahl von Stegen (48) umfasst, die einerseits an der Außenseite des Bündels (24) und andererseits an der Gehäusewand (34) anliegen.

2. Behandlungsvorrichtung nach Anspruch 1,
**dadurch gekennzeichnet, dass**
der Kanal, insbesondere mittig, in einem im Wesentlichen runden Bündel (24) der Hohlfasermembranen angeordnet ist.

3. Behandlungsvorrichtung nach Anspruch 1 oder 2,
**dadurch gekennzeichnet, dass**
die Stege (48) in der Umfangsrichtung des Bündels (24) gleichmäßig voneinander beabstandet sind, und/oder in dass die Behandlungsvorrichtung eine insbesondere als Schraubenfeder (46) ausgebildete Tragstruktur für die Hohlfasermembranen des den Kanal umgebenden Bündels (24) umfasst.

4. Behandlungsvorrichtung nach einem der Ansprüche 1 bis 3,
**dadurch gekennzeichnet, dass**
das Bündel (24) im Wesentlichen rund ausgebildet ist, wobei wenigstens ein bodenseitiger Teil eines Gehäuses (22) der Baueinheit mindestens einen Eckbereich aufweist, von dem der mindestens eine Sammelbereich (36) für das flüssige Wasser gebildet ist.

5. Behandlungsvorrichtung nach einem der Ansprüche 1 bis 4,
**dadurch gekennzeichnet, dass**
zwei insbesondere symmetrisch angeordnete Bündel (24) in einem Gehäuse (22) der Baueinheit untergebracht sind, wobei der mindestens eine Sammelbereich (36) für das flüssige Wasser in einer insbesondere V-förmigen Ausnehmung eines Bodens (38) des Gehäuses (22) zwischen den beiden Bündeln (24) ausgebildet ist.

6. Behandlungsvorrichtung nach Anspruch 5,
**dadurch gekennzeichnet, dass**
in einem Raum (40) zwischen den beiden Bündeln (24) und einem Deckenbereich (42) des Gehäuses (22) mindestens ein weiterer Sammelbereich für das zumindest weitgehend von flüssigem Wasser befreite Abgas vorgesehen ist.

7. Behandlungsvorrichtung nach Anspruch 5 oder 6,
**gekennzeichnet durch**
eine Haltestruktur (50), die die beiden Bündel (24) voneinander beabstandet hält und mindestens ein Versteifungselement (52) aufweist, das das jeweilige Bündel (24) zumindest in gewissen Bereichen umschließt.

8. Brennstoffzellensystem, insbesondere für ein Fahrzeug, mit einer Behandlungsvorrichtung nach einem der Ansprüche 1 bis 7, wobei das Abgas einer Kathode (14) des Brennstoffzellenstapels (16) in einem Befeuchter (12) für ein Oxidans verwendet werden kann, das in the Kathode (14) des Brennstoffzellenstapels (16) eingeführt werden kann, und wobei das zumindest weitgehend von flüssigem Wasser befreite Abgas einer Turbine (44) eines Abgasturboladers der Brennstoffzellensystems (10) zugeleitet werden kann.

9. Fahrzeug mit einem Brennstoffzellensystem (10) nach Anspruch 8.

## Revendications

1. Dispositif de traitement destiné à traiter le gaz d'échappement d'un empilement de cellules élémentaires (16) d'un système de pile à combustible (10), comprenant un humidificateur (12), dans lequel le gaz d'échappement peut être utilisé pour humidifier un milieu pouvant être introduit dans l'empilement de cellules élémentaires (16), et comprenant un séparateur d'eau destiné à réduire une teneur en eau liquide dans le gaz d'échappement, l'humidificateur (12) et le séparateur d'eau étant intégrés dans une unité structurale commune,
une zone d'écoulement sortant (28) de l'humidificateur (12) ayant une section transversale pouvant être traversée, qui est supérieure à une section transversale d'une zone d'écoulement entrant (26) de l'humidificateur (12) pouvant être traversé, au moins une zone de collecte (36) pour l'eau liquide séparée au moment où elle sort de la zone d'écoulement sortant (28) est aménagée dans l'unité de construction,
**caractérisé en ce que**
la zone d'écoulement entrant (26) est conçue sous la forme d'un canal qui est disposé dans un faisceau (24) de membranes de fibre creuse, le faisceau (24) pouvant être traversé par le gaz d'échappement dans la direction radiale, la zone d'écoulement sortant (28) étant constitué par un extérieur du faisceau (24), entre l'extérieur du faisceau (24) et une paroi de boîtier (34) de l'unité de construction se trouve un espace libre (32) en communication avec ladite zone de collecte (36) pour l'eau liquide et le dispositif de traitement comprenant une pluralité de bandes (48) qui sont en appui contre l'extérieur du faisceau (24) d'une part et contre la paroi de boîtier (34) d'autre part.

2. Dispositif de traitement selon la revendication 1, **caractérisé en ce que** le canal est disposé dans un faisceau sensiblement rond (24) des membranes en fibre creuse, en particulier au centre.

3. Dispositif de traitement selon la revendication 1 ou 2, **caractérisé en ce que** les bandes (48) sont espacées uniformément les unes des autres dans une direction circonférentielle du faisceau (24) et/ou le dispositif de traitement comprend une structure portante en particulier sous la forme d'un ressort hélicoïdal (46) pour les membranes en fibre creuse du faisceau (24) entourant le canal.

4. Dispositif de traitement selon l'une quelconque des revendications 1 à 3, **caractérisé en ce que** le faisceau (24) est sensiblement rond, au moins une partie côté fond d'un boîtier (22) de l'unité structurale présente au moins une zone cornière qui constitue ladite zone de collecte (36) pour l'eau liquide.

5. Dispositif de traitement selon l'une quelconque des revendications 1 à 4, **caractérisé en ce que** deux faisceaux (24) disposés particulièrement symétriquement sont disposés dans un boîtier (22) de l'unité structurale, ladite zone de collecte (36) pour l'eau liquide est conçue sous la forme d'un évidemment en particulier en V d'un fond (38) du boîtier (22) disposé entre les deux faisceaux (24).

6. Dispositif de traitement selon la revendication 5, **caractérisé en ce qu'**au moins une autre zone de collecte pour le gaz d'échappement au moins en grande partie libérée d'eau liquide est aménagée dans un espace (40) entre les deux faisceaux (24) et une zone supérieure (42) du boîtier (22).

7. Dispositif de traitement selon la revendication 5 ou 6, **caractérisé par** une structure de retenue (50), qui maintient les deux faisceaux (24) espacés l'un de l'autre et présente au moins un élément rigidifiant (52) entourant le faisceau respectif (24) au moins à certains endroits.

8. Système de pile à combustible, en particulier pour un véhicule, comprenant un dispositif de traitement selon l'une quelconque des revendications précédentes 1 à 7, le gaz d'échappement d'une cathode (14) de l'empilement de cellules élémentaires (16) pouvant être utilisé dans l'humidificateur (12) destiné à humidifier un oxydant pouvant être introduit dans la cathode (14) de l'empilement de cellules élémentaires (16), et le gaz d'échappement au moins en grande partie libéré de l'eau liquide pouvant être fourni à une turbine (44) d'un turbocompresseur du système de pile à combustible (10).

9. Véhicule équipé d'un système de pile à combustible (10) selon la revendication 8.
